# EUROPEAN PATENT APPLICATION

(11) **EP 4 219 396 A1**
(43) Date of publication of application: **02.08.2023**
(21) Application number: 23153488.4
(22) Date of filing: 26.01.2023
(51) Int. Cl.: C01B 32/00, C01B 32/158, H01M 4/13, H01M 4/62, H01M 10/052, C08K 3/04, H01M 4/02

(54) **CARBON-BASED CONDUCTIVE AGENT, SECONDARY BATTERY, AND ELECTRICAL DEVICE**

(30) Priority: 29.01.2022 CN 202210112138
(71) Applicant: Ningde Amperex Technology Limited, Ningde City, Fujian Province 352100 (CN)
(72) Inventor: CHEN, Meifeng, Ningde City, Fujian Province, People's Republic of China, 352100 (CN)
(74) Representative: Icosa

(57) **Abstract**

A carbon-based conductive agent includes carbon tubes. Each carbon tube includes a tube wall and a hollow region enclosed by the tube wall. At the least one of the tube wall includes pores. An average length of the carbon tubes is L₁ µm and satisfies 2.5 ≤ L₁ ≤ 20. The carbon tubes in the carbon-based conductive agent according to this application are of a hollow structure, and include pores on the surface, thereby facilitating circulation of an electrolytic solution in channels. In this way, ions such as lithium ions are enabled to be intercalated into and deintercalated from any position of the carbon tubes, thereby increasing ion transport channels, shortening a transport path, and enhancing the rate performance of the battery.

## Description

### TECHNICAL FIELD

This application relates to the technical field of batteries, and in particular, to a carbon-based conductive agent, a secondary battery, and an electrical device.

### BACKGROUND

Secondary batteries represented by lithium-ion secondary batteries are a type of high-capacity, long-life, and environmentally friendly battery characterized by a high voltage, high specific energy, a long cycle life, good safety performance, a low self-discharge rate, no memory effect, fast charge and discharge, a wide operating temperature range, and many other merits, and are widely used in the fields such as energy storage, electric vehicles, and portable electronic products. Currently, with the development of science and technology, higher requirements are imposed on an energy density of the batteries. A typical method for increasing the energy density of a battery includes applying a thick coating to an electrode or increasing a compacted density of the electrode. However, the thicker coating and the higher compacted density increase the energy density of the battery at the cost of significant deterioration of rate performance of the battery.

### SUMMARY

This application is developed in view of the foregoing problem. An objective of this application is to provide a carbon-based conductive agent, a secondary battery, and an electrical device that can enhance both an energy density and rate performance of a battery concurrently.

To achieve the foregoing objective, a first aspect of this application provides a carbon-based conductive agent. The carbon-based conductive agent includes carbon tubes. Each carbon tube includes a tube wall and a hollow region enclosed by the tube wall. At least one of the tube walls includes pores. An average length of the carbon tubes is L₁ µm and satisfies 2.5 ≤ L₁ ≤ 20.

Therefore, this application employs a carbon-based conductive agent containing carbon tubes. The carbon tubes are of a hollow structure and include pores on the surface, and therefore, can absorb an electrolytic solution and enable charge-carrying ions such as lithium ions to be intercalated into and deintercalated from any position of the carbon tubes, thereby increasing ion transport channels, shortening the transport path, improving ion diffusion, and enhancing low-temperature performance and rate performance.

In any embodiment, the number of the pores is n that is greater than or equal to 3.

When exceeding a specified value range, the number of pores on the wall of the carbon tubes facilitates shortening of the transport path of charge-carrying ions, and facilitates ion intercalation into and deintercalation from any position, thereby providing a through transport channel for the ions and enhancing the rate performance of the battery.

In any embodiment, the carbon tubes satisfy at least one of the following conditions:
(1) an outside diameter of the carbon tubes is Φ₁ µm and satisfies 0.1 ≤ Φ₁ ≤ 2; and
(2) a length-to-outer diameter ratio of the carbon tubes is 1.3 to 50.

In any embodiment, an outside diameter of the carbon tubes is Φ₁ µm and satisfies 0.1 ≤ Φ₁ ≤ 1.5; and/or

A length-to-outer diameter ratio of the carbon tubes is 3 to 40.

When falling within an appropriate range, the average length, outside diameter, and length-to-outer diameter ratio of the carbon tubes facilitate circulation of the electrolytic solution in the channels and increase the diffusion rate of ions, thereby enhancing the rate performance of the battery.

In any embodiment, an area tratio of a pore region on the tube wall is 5% to 30%.

When falling within an appropriate range, the area percent of the pore region facilitates ion intercalation into and deintercalation from any position of the carbon tubes, thereby shortening the ion transport path and enhancing the rate performance.

A second aspect of this application provides a secondary battery, including a positive electrode sheet. The positive electrode sheet includes a positive current collector and a positive active material layer. The positive active material layer includes a positive active material and the carbon-based conductive agent according to the first aspect of this application.

Therefore, this application employs a positive active material layer containing a carbon-based conductive agent. The carbon-based conductive agent can increase ion transport channels and shorten the transport path, thereby increasing the diffusion rate of ions and enhancing the rate performance of the thickly coated secondary battery of a high compacted density.

In any embodiment, based on a total mass of the positive active material layer, a mass percentage of the carbon tubes in the positive active material layer is 0.1% to 1.0%.

When falling within an appropriate range, the mass percent of the carbon tubes in the positive active material layer ensures increase of the ionic conductivity without impairing the overall electrical performance of the electrode sheet of the battery.

In any embodiment, the positive active material layer further includes carbon nanotubes.

In any embodiment, the carbon nanotubes satisfy at least one of conditions (3) to (5):
(3) the carbon nanotubes are disposed on a surface of particles of the positive active material;
(4) an average length of the carbon nanotubes is L₂ µm and satisfies 0.1 ≤ L₂ ≤ 5; and
(5) a outer diameter of the carbon nanotubes is Φ₂ nm and satisfies 3 ≤ Φ₂ ≤ 20.

In any embodiment, an average length of the carbon nanotubes is L₂ µm and satisfies 1 ≤ L₂ ≤ 4; and/or a outer diameter of the carbon nanotubes is Φ₂ nm and satisfies 5 ≤ Φ₂ ≤ 15.

The carbon nanotubes are disposed on the surface of the particles of the positive active material, and the length and outer diameter of the carbon nanotubes are controlled to fall within an appropriate range, thereby facilitating formation of ion transport channels between the carbon nanotubes while balancing the overall electrical performance of the battery.

In any embodiment, the positive active material layer satisfies at least one of conditions (6) to (8):
(6) a single-side thickness of the positive active material layer is T µm and satisfies 30 ≤ T ≤ 250;
(7) a single-side areal density of the positive active material layer is ρ g/m² and satisfies 100 ≤ ρ ≤ 600; and
(8) a specific surface area of the positive active material layer is S m²/g and satisfies 0.1 ≤ S ≤ 15.

In any embodiment, a single-side thickness of the positive active material layer is T µm and satisfies 100 ≤ T ≤ 200; and/or
a single-side areal density of the positive active material layer is ρ g/m² and satisfies 200 ≤ ρ ≤ 500; and/or
a specific surface area of the positive active material layer is S m²/g and satisfies 0.17 ≤ S ≤ 11.

When falling within an appropriate range, the single-side thickness, single-side areal density, and specific surface area of the positive active material layer help to ensure relatively excellent electrical performance of the entire battery such as rate performance, energy density, and cycle performance.

In any embodiment, a specific surface area of the positive active material layer is S m²/g and the average length of the carbon tubes is L₁ µm, satisfying: L₁ ≥ 0.5 S.

When a specified proportional relationship is kept between the specific surface area of the positive active material layer and the length of the carbon tubes, the specific surface area of the positive active material layer can be controlled to fall within an appropriate range by selecting an appropriate length of the carbon tubes, thereby enhancing ion transport efficiency, charge-and-discharge efficiency, and rate performance of the battery.

A third aspect of this application provides an electrical device. The electrical device includes the secondary battery according to the second aspect of this application.

### BRIEF DESCRIPTION OF DRAWINGS

FIG. 1 is a scanning electron microscope image of a carbon-based conductive agent according to an embodiment of this application; and
FIG. 2 is a scanning electron microscope image of carbon tubes according to an embodiment of this application.

### DETAILED DESCRIPTION OF EMBODIMENTS

The following describes and discloses in detail some embodiments of a carbon-based conductive agent, a battery electrode sheet, a secondary battery, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

During research, the applicant finds that in an existing battery electrode sheet, in order to increase an energy density of a battery, a coating weight per unit area of the electrode sheet of the battery is increased. That is, the electrode sheet of the battery is thickly coated. The most direct and effective method for increasing the energy density is to apply a thick coating and increase a compacted density of the electrode sheet of the battery concurrently. However, the thick coating prolongs an ion diffusion path, gives rise to a relatively steep gradient of ion concentration in a thickness direction of the electrode sheet, thereby increasing a gradient of a concentration of an electrolytic solution, aggravating polarization of the battery, and deteriorating the rate performance of the battery. In addition, the high compacted density of the electrode sheet of the battery greatly reduces a porosity of the electrode sheet, makes it more difficult for the electrolytic solution to permeate, decreases ion transport channels, and prolongs the diffusion path, thereby reducing the diffusion rate of ions and deteriorating the rate performance of the electrode sheet of the battery.

In view of the foregoing technical problems, this application discloses a carbon-based conductive agent. The carbon-based conductive agent includes carbon tubes. Compared with a carbon nanotube conductive agent, the carbon tubes are of a hollow structure, thereby increasing the ion transport channels and facilitating circulation of the electrolytic solution in the channels. In addition, the wall of the carbon tubes includes pores, thereby making it convenient to intercalate ions into and deintercalate ions from any position, greatly shortening the migration path of the ions and increasing the migration speed, and in turn, significantly increasing the ionic conductivity. In addition, the pores on the tube wall increase paths for circulating the electrolytic solution, shortens a travel distance of the electrolytic solution, and increases the charge-and-discharge speed, thereby greatly enhancing the rate performance of a thickly coated electrode of a high compacted density. In this way, the battery achieves a high energy density and high rate performance concurrently.

### Carbon-based conductive agent

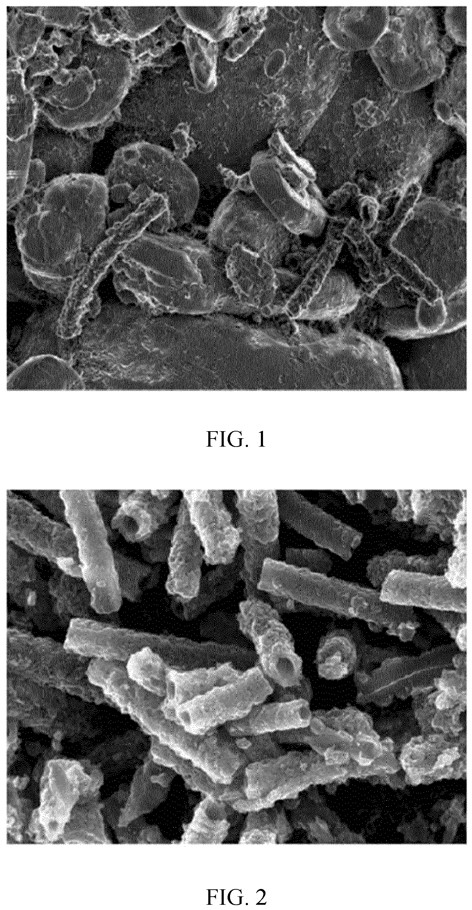

In an embodiment of this application, as shown in FIG. 1, a first aspect of this application discloses a carbon-based conductive agent. The carbon-based conductive agent includes carbon tubes. As shown in FIG. 2, each carbon tube includes a tube wall and a hollow region enclosed by the tube wall. At least one of the tube walls includes pores. An average length of the carbon tubes is L₁ µm and satisfies 2.5 ≤ L₁ ≤ 20.

In some embodiments, an average length of the carbon tubes is L₁ µm and satisfies 3 ≤ L₁ ≤ 18. In some embodiments, the average length of the carbon tubes is L₁ µm and satisfies 3.5 ≤ L₁ ≤ 15. In some embodiments, the average length of the carbon tubes is L₁ µm and satisfies 3.8 ≤ L₁ ≤ 14. In some embodiments, L₁ may be 3, 4, 5, 6, 8, 9, 10, 12, 14, 15, 16, 18, or a value falling within a range formed by any two thereof.

The carbon-based conductive agent according to this application includes carbon tubes. The carbon tubes are of a hollow structure and include pores on the surface, thereby increasing ion transport channels, facilitating circulation of the electrolytic solution in the channels, leading to more sufficient infiltration by the electrolytic solution and more thorough reactions on the electrode sheet of the battery, and in turn, alleviating the polarization. In addition, the wall of the carbon tubes includes pores, thereby making it convenient to intercalate ions into and deintercalate ions from any position, greatly shortening the migration path of the ions and increasing the migration speed, significantly increasing the ionic conductivity, reducing the concentration gradient of ions in the electrolytic solution, and alleviating polarization of the battery. In addition, the pores on the wall of the carbon tubes provide a new path for the circulation of the electrolytic solution, thereby improving the charge-and-discharge speed and the rate performance.

In any embodiment, the number of the pores is n that is greater than or equal to 3. In some embodiments, the number of the pores is n that is greater than or equal to 5. In some embodiments, the number of the pores is n that is greater than or equal to 8. In some embodiments, the number of the pores is n that is greater than or equal to 10.

In the carbon-based conductive agent according to this application, the number of pores greater than a specified value range on the wall of the carbon tubes helps to increase the diffusion channels of charge-carrying ions, shortens the transport path of the ions, and facilitates ion intercalation into and deintercalation from any position, thereby reducing the concentration gradient of the ions in the electrolytic solution, alleviating electrode polarization, and improving the charge-and-discharge speed and rate performance of the electrode sheet of the battery. In this application, the integrity of the carbon tube structure is ensured at the same time of controlling the number of pores, so that the carbon tubes maintain an appropriate conductive network structure and possess a high conductivity.

In any embodiment, an outside diameter of the carbon tubes is Φ₁ µm and satisfies 0.1 ≤ Φ₁ ≤ 2. In any embodiment, the outside diameter of the carbon tubes is Φ₁ µm and satisfies 0.1 ≤ Φ₁ ≤ 1.8. In any embodiment, the outside diameter of the carbon tubes is Φ₁ µm and satisfies 0.2 < Φ₁ ≤ 1.8. In any embodiment, Φ₁ may be 0.1, 0.2, 0.3, 0.5, 0.7, 1.0, 1.2, 1.5, 1.8, 2, or a value falling within a range formed by any two thereof.

In any embodiment, a length-to-outer diameter ratio of the carbon tubes is 1.3 to 50. In any embodiment, the length-to-outer diameter ratio of the carbon tubes is 2 to 48. In any embodiment, the length-to-outer diameter ratio of the carbon tubes is 3 to 45. In any embodiment, the length-to-outer diameter ratio of the carbon tubes is 3 to 25. In any embodiment, the length-to-outer diameter ratio of the carbon tubes is 3 to 19. In any embodiment, the length-to-outer diameter ratio of the carbon tubes is 3 to 40. In any embodiment, the length-to-outer diameter ratio of the carbon tubes may be 1.3, 2, 3, 5, 7, 10, 12, 15, 18, 20, 25, 28, 30, 35, 38, 40, 45, 48, 50, or a value falling within a range formed by any two thereof.

In the carbon-based conductive agent according to this application, the average length, outside diameter, and length-to-outer diameter ratio of the carbon tubes fall within appropriate ranges, thereby facilitating circulation of the electrolytic solution in the channels, leading to more sufficient infiltration by the electrolytic solution and more thorough reactions on the electrode, and in turn, alleviating the polarization, enhancing the rate performance, and increasing the processability of the electrode sheet of the battery.

In any embodiment, an area tratio of a pore region on the tube wall is 5% to 30%. In any embodiment, the area tratio of the pore region on the tube wall is 6 % to 27 %. In any embodiment, the area tratio of the pore region on the tube wall is 6 % to 25 %. In any embodiment, the area tratio of the pore region on the tube wall may be 5%, 6%, 8%, 10%, 13%, 15%, 18%, 20%, 23%, 25%, 27%, 30%, or a value falling within a range formed by any two thereof.

In the carbon-based conductive agent according to this application, when falling within an appropriate range, the area percent of the pore region on the wall of the carbon tubes facilitates circulation of the electrolytic solution in the channels, increases the diffusion rate of ions, and maintains a relatively high electrical conductivity of the carbon tubes, thereby enhancing the rate performance of the battery.

The carbon-based conductive agent containing carbon tubes according to this application is not only applicable to lithium-ion secondary batteries, but also applicable to other secondary batteries such as sodium-ion secondary batteries. In addition, the carbon-based conductive agent is not only applicable to a positive electrode sheet of the secondary battery, but also applicable to a negative electrode sheet of the secondary battery.

In an embodiment of this application, a second aspect of this application further provides a secondary battery, including a positive electrode sheet. The positive electrode sheet includes a positive current collector and a positive active material layer. The positive active material layer includes a positive active material and the carbon-based conductive agent according to the first aspect of this application.

In an embodiment of this application, the positive electrode sheet includes a positive current collector and a positive active material layer. The positive active material layer includes a positive active material composition.

Therefore, some embodiments of this application further provide a positive active material composition, including a positive active material and the conductive agent according to the first aspect of this application.

In an embodiment of this application, the positive active material composition includes a positive active material, the conductive agent according to the first aspect of this application, and optionally, a binder.

In an embodiment of this application, the positive active material composition includes a positive active material, the conductive agent according to the first aspect of this application, the carbon nanotubes according to the second aspect of this application, and optionally, a binder.

Examples of the positive active material include, but are not limited to, lithium transition metal oxide, sodium transition metal oxide, and modified compounds thereof, for example, lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), and modified compounds thereof.

In an embodiment of this application, the positive active material includes a metal element M. The metal element M may be added into the positive active material by means of doping, coating, or other means. The metal element M includes at least one of Mg, Ca, Sr, Ba, Ti, Zr, Nb, Mo, W, Zn, Al, Cr, Fe, or V. The added metal element M can further improve the stability and conductivity of the positive active material during high-rate charging or discharging, and further enhance the rate performance of the battery.

Optionally, the conductive agent may further include other conventional conductive agents such as superconductive carbon, acetylene black, carbon black, Ketjen black, carbon dots, carbon nanotubes, graphene, or carbon nanofibers.

Examples of the binder include but are not limited to polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), fluorinated acrylate resin, and the like.

The positive electrode sheet of the secondary battery according to this application includes a positive active material layer that contains a carbon-based conductive agent according to the first aspect of this application. The carbon-based conductive agent containing carbon tubes can increase ion transport channels and shorten the transport path, thereby increasing the diffusion rate of ions and the transport rate of the electrolytic solution, reducing the concentration gradient of the ions in the electrolytic solution, alleviating electrode polarization, and in turn, enhancing the rate performance of the thickly coated secondary battery of a high compacted density.

In any embodiment, based on a total mass of the positive active material layer, a mass percentage of the carbon tubes in the positive active material layer is 0.1% to 1.0%. In any embodiment, based on the total mass of the positive active material layer, the mass percentage of the carbon tubes in the positive active material layer is 0.3% to 0.8%. In any embodiment, based on the total mass of the positive active material layer, the mass percentage of the carbon tubes in the positive active material layer may be 0.1%, 0.2%, 0.3%, 0.5%, 0.6%, 0.8%, 1.0%, or a value falling within a range formed by any two thereof.

In the positive electrode sheet of the secondary battery according to this application, when falling within an appropriate range, the mass percent of the carbon tubes in the positive active material layer helps to ensure that the carbon tubes improve the ionic conductivity and improve the rate performance of the electrode sheet of the battery without impairing the overall electrical performance of the battery.

In any embodiment, the positive active material layer further includes carbon nanotubes.

In any embodiment, the carbon nanotubes are disposed on a surface of particles of the positive active material.

In any embodiment, an average length of the carbon nanotubes is L₂ µm and satisfies 0.1 ≤ L₂ ≤ 5. In any embodiment, the average length of the carbon nanotubes is L₂ µm and satisfies 0.5 ≤ L₂ ≤ 4. In any embodiment, the average length of the carbon nanotubes is L₂ µm and satisfies 1 ≤ L₂ ≤ 4. In any embodiment, the average length of the carbon nanotubes is L₂ µm and satisfies 1.5 ≤ L₂ ≤ 4. In any embodiment, the average length of the carbon tubes is L₂ µm, and L₂ may be 0.1, 0.3, 0.5, 0.8, 1, 1.5, 1.8, 2, 2.5, 2.8, 3, 3.5, 4, 4.5, 5, or a value falling within a range formed by any two thereof.

In any embodiment, a outer diameter of the carbon nanotubes is Φ₂ nm and satisfies 3 ≤ Φ₂ ≤ 20. In any embodiment, the outer diameter of the carbon nanotubes is Φ₂ nm and satisfies 5 ≤ Φ₂ ≤ 15. In any embodiment, the outer diameter of the carbon nanotubes is Φ₂ nm, and Φ₂ may be 3, 4, 4.5, 5, 7, 9, 11, 13, 15, 17, 20, or a value falling within a range formed by any two thereof.

In the positive electrode sheet of the secondary battery according to this application, the positive active material layer includes carbon nanotubes. The carbon nanotubes are disposed on the surface of the particles of the positive active material. The length and outer diameter of the carbon nanotubes are controlled to fall within an appropriate range, thereby facilitating formation of ion transport channels through pores between the carbon nanotubes to accelerate ion transport while forming a sounder conductive network to ensure a balance of the overall electrical performance of the battery.

In any embodiment, a single-side thickness of the positive active material layer is T µm and satisfies 30 ≤ T ≤ 250. In any embodiment, the single-side thickness of the positive active material layer is T µm and satisfies 60 ≤ T ≤ 200. In any embodiment, the single-side thickness of the positive active material layer is T µm and satisfies 100 ≤ T ≤ 200. In any embodiment, the single-side thickness of the positive active material layer is T µm, and T may be 30, 40, 45, 60, 80, 100, 110, 130, 150, 170, 180, 200, or a value falling within a range formed by any two thereof.

In any embodiment, a single-side areal density of the positive active material layer is ρ g/m² and satisfies 100 ≤ ρ ≤ 600. In any embodiment, the single-side areal density of the positive active material layer is ρ g/m² and satisfies 150 ≤ ρ ≤ 550. In any embodiment, the single-side areal density of the positive active material layer is ρ g/m² and satisfies 200 ≤ ρ ≤ 500. In any embodiment, the single-side areal density of the positive active material layer is ρ g/m², and ρ may be 100, 130, 150, 180, 200, 250, 270, 300, 350, 370, 400, 450, 500, 550, 600, or a value falling within a range formed by any two thereof.

In any embodiment, a specific surface area of the positive active material layer is S m²/g and satisfies 0.1 ≤ S ≤ 15. In any embodiment, the specific surface area of the positive active material layer is S m²/g and satisfies 0.15 ≤ S ≤ 12. In any embodiment, the specific surface area of the positive active material layer is S m²/g and satisfies 0.17 ≤ S ≤ 11. In any embodiment, the specific surface area of the positive active material layer is S m²/g, and S may be 0.1, 0.15, 0.17, 0.2, 0.5, 0.7, 1, 1.5, 2, 3, 5, 7, 9, 11, 12, 13, 15, or a value falling within a range formed by any two thereof.

In the positive electrode sheet of the secondary battery according to this application, when falling within appropriate ranges, the single-side thickness, single-side areal density, and specific surface area of the positive active material layer help to ensure a relatively high energy density and cycle performance of the electrode sheet of the battery, and help to ensure processability of the electrode sheet of the battery.

In any embodiment, the specific surface area of the positive active material layer is S m²/g and the average length of the carbon tubes is L₁ µm, satisfying: L₁ ≥ 0.5 S.

In the positive electrode sheet of the secondary battery according to this application, by keeping a specified proportional relationship between the specific surface area of the positive active material layer and the length of the carbon tubes, the specific surface area of the positive active material layer can be controlled to fall within an appropriate range by selecting an appropriate length of the carbon tubes, thereby enhancing ion transport efficiency, charge-and-discharge efficiency, and rate performance of the battery.

Next, a secondary battery and an electrical device according to this application are described below with due reference to drawings.

### Secondary battery

In an embodiment of this application, a secondary battery is provided.

Generally, the secondary battery includes a positive electrode sheet, a negative electrode sheet, an electrolyte, and a separator. In a charge-and-discharge cycle of the battery, active ions are shuttled between the positive electrode sheet and the negative electrode sheet by intercalation and deintercalation. The electrolyte serves to conduct ions between the positive electrode sheet and the negative electrode sheet. Disposed between the positive electrode sheet and the negative electrode sheet, the separator primarily serves to prevent a short circuit between the positive electrode sheet and the negative electrode sheet while allowing passage of ions. In some embodiments of this application, a lithium-ion secondary battery is used as an example for describing the secondary battery, but the secondary battery may be another type of secondary battery instead, such as a sodium-ion secondary battery.

### [Positive electrode sheet]

The positive electrode sheet includes a positive current collector and a positive active material layer that overlays at least one surface of the positive current collector and that contains the carbon-based conductive agent according to this application. The positive active material layer includes a positive active material.

As an example, the positive current collector includes two surfaces opposite to each other in a thickness direction of the current collector. The positive active material layer is disposed on one or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In an embodiment of this application, the positive active material includes a metal element M. The metal element M may be added into the positive active material by means of doping, coating, or other means. The metal element M includes Mg, Ca, Sr, Ba, Ti, Zr, Nb, Mo, W, Zn, Al, Cr, Fe, V, a rare earth element, or any combination thereof.

In some embodiments, the positive active material layer includes the carbon-based conductive agent according to this application.

In some embodiments, the positive active material layer further includes the carbon nanotubes according to this application.

In some embodiments, the positive active material layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode sheet may be prepared according to the following method: dispersing the ingredients of the positive electrode sheet such as the positive active material, the carbon-based conductive agent, the carbon nanotubes, the binder, and any other ingredients into a solvent (such as N-methylpyrrolidone) to form a positive slurry, coating a positive current collector with the positive slurry, drying the positive slurry on the current collector, and performing cold calendering and other steps to form a positive active material layer so that a positive electrode sheet (also known as a positive electrode) is obtained.

The compacted density of the positive active material layer (also known as a compacted density of the positive electrode sheet) varies between different positive active materials.

For a positive active material layer containing lithium cobalt oxide as a positive active material, the compacted density of the positive active material layer that is greater than 3.9 g/cm³ is deemed a high compacted density. For example, the compacted density of the positive active material layer is greater than 3.9 g/cm³ and less than 4.9 g/cm³. For a system in which the positive active material is lithium cobalt oxide, the compacted density of the positive active material layer may be greater than or equal to 4.0 g/cm³ and less than 4.85 g/cm³.

For a positive active material layer containing lithium nickel cobalt manganese oxide or lithium nickel cobalt aluminum oxide as a positive active material, the compacted density of the positive active material layer that is greater than 3.35 g/cm³ is deemed a high compacted density. For example, the compacted density of the positive active material layer is greater than 3.35 g/cm³ and less than 4.5 g/cm³. For a positive active material layer containing lithium nickel cobalt manganese oxide or lithium nickel cobalt aluminum oxide as a positive active material, the compacted density of the positive active material layer may be greater than or equal to 3.45 g/cm³ and less than 4.55 g/cm³.

For a positive active material layer containing lithium iron phosphate as a positive active material, the compacted density of the positive active material layer that is greater than 2.05 g/cm³ is deemed a high compacted density. For example, the compacted density of the positive active material layer is greater than 2.05 g/cm³ and less than 3.4 g/cm³. For a positive active material layer containing lithium iron phosphate as a positive active material, the compacted density of the positive active material layer may be greater than or equal to 2.15 g/cm³ and less than 3.3 g/cm³.

For a positive active material layer containing lithium manganese oxide as a positive active material, the compacted density of the positive active material layer that is greater than 2.65 g/cm³ is deemed a high compacted density. For example, the compacted density of the positive active material layer is greater than 2.65 g/cm³ and less than 4.1 g/cm³. For a positive active material layer containing lithium manganese oxide as a positive active material, the compacted density of the positive active material layer may be greater than or equal to 2.75 g/cm³ and less than 4.0 g/cm³.

### [Negative electrode sheet]

The negative electrode sheet includes a negative current collector and a negative active material layer disposed on at least one surface of the negative current collector. The negative active material layer includes a negative active material.

For example, the negative current collector includes two surfaces opposite to each other in a thickness direction of the current collector. The negative active material layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be used in combination.

In some embodiments, the negative active material layer further includes a conductive agent. The conductive agent may be at least one selected from the carbon-based conductive agent according to this application, superconductive carbon, acetylene black, carbon black, Ketjen black, carbon dots, carbon nanotubes, graphene, and carbon nanofibers.

In some embodiments, the negative active material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative active material layer further optionally includes other agents, such as a thickener (for example, sodium carboxymethyl cellulose (CMC-Na)).

In some embodiments, the negative electrode sheet may be prepared according to the following method: dispersing the ingredients of the negative electrode sheet such as the negative active material, the conductive agent, and the binder and any other ingredients in a solvent (such as deionized water) to form a negative slurry, coating a negative current collector with the negative slurry, and performing steps such as drying and cold calendering to obtain the negative electrode sheet.

### [Electrolyte]

The electrolyte serves to conduct ions between the positive electrode sheet and the negative electrode sheet. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode sheet, the negative electrode sheet, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

The shape of the secondary battery is not particularly limited in this application, and may be cylindrical, prismatic or any other shape.

Further, this application provides an electrical device. The electrical device includes the secondary battery according to this application. The secondary battery may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, or an energy storage system.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### Preparing a positive electrode sheet

Mixing a positive active material LiCoO₂, a conductive agent, and a binder PVDF (at a mass percent shown in Table 1), adding a solvent NMP, and stirring well to obtain a positive slurry; coating a 12-µm thick positive current collector aluminum foil with the positive slurry, and then baking the aluminum foil at 120 °C for 1 hour, compacting and slitting the aluminum foil, and welding tabs to obtain a positive electrode sheet, where the conductive agent is a mixture of the carbon-based conductive agent containing carbon tubes according to this application, carbon nanotubes (CNTs), and conductive carbon black SP. The compacted density of the prepared positive active material layer is 4.3 g/cm³.

### Preparing a negative electrode sheet

Mixing graphite as a negative active material, acetylene black, CMC, and SBR at a mass ratio of 97: 1: 1: 1, and then adding deionized water as a solvent. Stirring with a vacuum mixer to obtain a negative slurry. Coating a negative current collector copper foil with the negative slurry evenly. Drying, cold-calendering, and slitting the copper foil, and welding tabs to obtain a negative electrode sheet.

### Separator

Using a polyethylene (PE) film as a separator.

### Preparing an electrolytic solution

Mixing ethylene carbonate (EC), ethyl methyl carbonate (EMC), and diethyl carbonate (DEC) at a mass ratio of 1: 1: 1, and then dissolving LiPF₆ in the forgoing solution evenly to obtain an electrolytic solution. Adding fluoroethylene carbonate (FEC), 1,3-propane sultone, and adiponitrile. Based on the mass of the electrolytic solution, the mass percent of LiPF₆ is 12%, the mass percent of the FEC in the electrolytic solution is 6%, the mass percent of the 1,3-propane sultone in the electrolytic solution is 2%, the mass percent of the adiponitrile in the electrolytic solution is 2%, and the solvent accounts for the remaining proportion of the mass of the electrolytic solution.

### Preparing a secondary battery

Stacking a positive electrode sheet, a separator, and a negative electrode sheet in sequence, and winding the stacked structure to make an electrode assembly. Putting the electrode assembly into an aluminum foil package, injecting an electrolytic solution, and performing chemical formation and packaging to obtain a lithium-ion battery.

### Embodiments 2 to 37 and Comparative Embodiments 1 to 8

The secondary batteries in Embodiments 2 to 37 and the secondary batteries in Comparative Embodiments 1 to 8 are prepared by a method similar to the preparation method of the secondary battery in Embodiment 1 except that the relevant parameters of the carbon tubes in the carbon-based conductive agent and the relevant parameters of the carbon nanotubes (CNT) in the positive active material layer are adjusted. For details of product parameters, see Table 1.

### Embodiments 38 to 45

The secondary batteries in Embodiments 36 to 45 are prepared by a method similar to the preparation method of the secondary battery in Embodiment 1, and the parameters of the conductive agent are the same as those in Embodiment 2 except that the relevant parameters of the positive active material layer are adjusted. For details of product parameters, see Table 2. In Table 2, the compacted density of the NCM523 positive active material layer is 3.55 g/cm³, the compacted density of the LFP positive active material layer is 2.3 g/cm³, and the compacted density of the LiMnO₂ positive active material layer is 2.8 g/cm³.

The relevant parameters of the positive materials in Embodiments 1 to 37 and Comparative Embodiments 1 to 8 are shown in Table 1 below.

**Table 1 Parameters and test results of Embodiments 1 to 37 and Comparative Embodiments 1 to 8**

| Item | Positive active material layer | | | | | | | | | | | | |
|---|---|---|---|---|---|---|---|---|---|---|---|---|---|
| | Conductive agent | | | | | | | | | LCO mass percent (%) | PVDF mass percent (%) | Single-side hickness (µm) | Single-side areal density (g/m²) |
| | Carbon tubes | | | | | SP | CNT | | | | | | |
| | Average length (µm) | Number of pores (≥3) | Length-to-outer diameter ratio | Area percent of pore region (%) | Mass percent (%) | Mass percent (%) | Mass percent (%) | Average length (µm) | Outer diameter (nm) | | | | |
| Embodiment 1 | 16 | 3 | 25 | 5 | 0.5 | 0.6 | 0.5 | 1 | 15 | 97.1 | 1.3 | 55 | 230 |
| Embodiment 2 | 16 | 8 | 25 | 7 | 0.5 | 0.6 | 0.5 | 1 | 15 | 97.1 | 1.3 | 55 | 230 |
| Embodiment 3 | 16 | 15 | 25 | 13 | 0.5 | 0.6 | 0.5 | 1 | 15 | 97.1 | 1.3 | 55 | 230 |
| Embodiment 4 | 2.5 | 10 | 25 | 30 | 0.5 | 0.6 | 0.5 | 1 | 15 | 97.1 | 1.3 | 55 | 230 |
| Embodiment 5 | 5 | 10 | 25 | 17 | 0.5 | 0.6 | 0.5 | 1 | 15 | 97.1 | 1.3 | 55 | 230 |
| Embodiment 6 | 7 | 10 | 25 | 14 | 0.5 | 0.6 | 0.5 | 1 | 15 | 97.1 | 1.3 | 55 | 230 |
| Embodiment 7 | 10 | 10 | 25 | 11 | 0.5 | 0.6 | 0.5 | 1 | 15 | 97.1 | 1.3 | 55 | 230 |
| Embodiment 8 | 13 | 10 | 25 | 9 | 0.5 | 0.6 | 0.5 | 1 | 15 | 97.1 | 1.3 | 55 | 230 |
| Embodiment 9 | 20 | 10 | 25 | 8 | 0.5 | 0.6 | 0.5 | 1 | 15 | 97.1 | 1.3 | 55 | 230 |
| Embodiment 10 | 3.5 | 10 | 1.3 | 27 | 0.5 | 0.6 | 0.5 | 1 | 15 | 97.1 | 1.3 | 55 | 230 |
| Embodiment | 3.5 | 10 | 3 | 26 | 0.5 | 0.6 | 0.5 | 1 | 15 | 97.1 | 1.3 | 55 | 230 |
| 11 | | | | | | | | | | | | | |
| Embodiment 12 | 3.5 | 10 | 5 | 29 | 0.5 | 0.6 | 0.5 | 1 | 15 | 97.1 | 1.3 | 55 | 230 |
| Embodiment 13 | 3.5 | 10 | 8 | 28 | 0.5 | 0.6 | 0.5 | 1 | 15 | 97.1 | 1.3 | 55 | 230 |
| Embodiment 14 | 3.5 | 10 | 12 | 25 | 0.5 | 0.6 | 0.5 | 1 | 15 | 97.1 | 1.3 | 55 | 230 |
| Embodiment 15 | 3.5 | 10 | 17 | 27 | 0.5 | 0.6 | 0.5 | 1 | 15 | 97.1 | 1.3 | 55 | 230 |
| Embodiment 16 | 3.5 | 10 | 21 | 28 | 0.5 | 0.6 | 0.5 | 1 | 15 | 97.1 | 1.3 | 55 | 230 |
| Embodiment 17 | 16 | 15 | 30 | 10 | 0.5 | 0.6 | 0.5 | 1 | 15 | 97.1 | 1.3 | 55 | 230 |
| Embodiment 18 | 16 | 15 | 35 | 9 | 0.5 | 0.6 | 0.5 | 1 | 15 | 97.1 | 1.3 | 55 | 230 |
| Embodiment 19 | 16 | 15 | 40 | 10 | 0.5 | 0.6 | 0.5 | 1 | 15 | 97.1 | 1.3 | 55 | 230 |
| Embodiment 20 | 16 | 15 | 50 | 11 | 0.5 | 0.6 | 0.5 | 1 | 15 | 97.1 | 1.3 | 55 | 230 |
| Embodiment 21 | 16 | 15 | 25 | 13 | 0.1 | 0.6 | 0.5 | 1 | 15 | 97.5 | 1.3 | 55 | 230 |
| Embodiment 22 | 16 | 15 | 25 | 13 | 0.3 | 0.6 | 0.5 | 1 | 15 | 97.3 | 1.3 | 55 | 230 |
| Embodiment 23 | 16 | 15 | 25 | 13 | 0.8 | 0.6 | 0.5 | 1 | 15 | 96.8 | 1.3 | 55 | 230 |
| Embodiment 24 | 16 | 15 | 25 | 13 | 1 | 0.6 | 0.5 | 1 | 15 | 96.6 | 1.3 | 55 | 230 |
| Embodiment 25 | 16 | 15 | 25 | 13 | 0.5 | 0.6 | 0.5 | 0.1 | 15 | 97.1 | 1.3 | 55 | 230 |
| Embodiment 26 | 16 | 15 | 25 | 13 | 0.5 | 0.6 | 0.5 | 0.8 | 15 | 97.1 | 1.3 | 55 | 230 |
| Embodiment 27 | 16 | 15 | 25 | 13 | 0.5 | 0.6 | 0.5 | 2 | 15 | 97.1 | 1.3 | 55 | 230 |
| Embodiment 28 | 16 | 15 | 25 | 13 | 0.5 | 0.6 | 0.5 | 5 | 15 | 97.1 | 1.3 | 55 | 230 |
| Embodiment 29 | 16 | 15 | 25 | 13 | 0.5 | 0.6 | 0.5 | 1 | 3 | 97.1 | 1.3 | 55 | 230 |
| Embodiment 30 | 16 | 15 | 25 | 13 | 0.5 | 0.6 | 0.5 | 1 | 8 | 97.1 | 1.3 | 55 | 230 |
| Embodiment 31 | 16 | 15 | 25 | 13 | 0.5 | 0.6 | 0.5 | 1 | 11 | 97.1 | 1.3 | 55 | 230 |
| Embodiment 32 | 16 | 15 | 25 | 13 | 0.5 | 0.6 | 0.5 | 1 | 15 | 97.1 | 1.3 | 55 | 230 |
| Embodiment 33 | 16 | 15 | 25 | 13 | 0.5 | 0.6 | 0.5 | 1 | 20 | 97.1 | 1.3 | 55 | 230 |
| Embodiment 34 | 16 | 3 | 25 | 5 | 0.5 | 0.5 | 0.6 | 1 | 15 | 97.1 | 1.3 | 55 | 230 |
| Embodiment 35 | 16 | 3 | 25 | 5 | 0.5 | 0.4 | 0.6 | 1 | 15 | 97.2 | 1.3 | 55 | 230 |
| Embodiment 36 | 16 | 3 | 25 | 5 | 0.5 | / | 0.5 | 1 | 15 | 97.7 | 1.3 | 55 | 230 |
| Embodiment 37 | 16 | 3 | 25 | 5 | 0.5 | 0.6 | / | / | / | 97.6 | 1.3 | 55 | 230 |
| Comparative Embodiment 1 | / | / | / | / | / | 0.6 | / | / | / | 98.1 | 1.3 | 55 | 230 |
| Comparative Embodiment | / | / | / | / | / | / | 0.5 | 1 | 15 | 98.2 | 1.3 | 55 | 230 |
| a | | | | | | | | | | | | | |
| Comparative Embodiment 3 | / | / | / | / | / | 0.6 | 0.5 | 1 | 15 | 97.6 | 1.3 | 55 | 230 |
| Comparative Embodiment 4 | 1.2 | 3 | 2 | 9 | 0.5 | 0.6 | 0.5 | 1 | 15 | 97.1 | 1.3 | 55 | 230 |
| Comparative Embodiment 5 | 2 | 3 | 25 | 12 | 0.5 | 0.6 | / | / | / | 97.6 | 1.3 | 55 | 230 |
| Comparative Embodiment 5 | 2 | 3 | 1 | 10 | 0.5 | 0.6 | 0.5 | 1 | 15 | 97.1 | 1.3 | 55 | 230 |
| Comparative Embodiment 7 | 16 | 0 | 25 | 0 | 0.5 | 0.6 | 0.5 | 1 | 15 | 97.1 | 1.3 | 55 | 230 |
| Embodiment 8 | 22 | 3 | 25 | 12 | 0.5 | 0.6 | 0.5 | 1 | 15 | 97.1 | 1.3 | 55 | 230 |

| | | | | | | | | | | | | | |
|---|---|---|---|---|---|---|---|---|---|---|---|---|---|
| In Table 1, "/" indicates that the parameter does not exist. | | | | | | | | | | | | | |

The relevant parameters of the positive materials in Embodiments 38 to 45 are shown in Table 2 below.

**Table 2 Parameters and test results of Embodiments 38 to 45**

| Item | Positive active material layer | | | | | | | | |
|---|---|---|---|---|---|---|---|---|---|
| | Single-side thickness (µm) | Single-side areal density (g/m²) | BET specific surface area (m²/g) | Ratio of specific surface area to carbon tube length L₁/S | Positive active material and mass percent (%) | PVDF mass percent (%) | Conductive agent mass percent (%) | | |
| | | | | | | | SP | Carbon tubes | CNT |
| Embodiment | 30 | 100 | 0.7 | 3 | 97.1 NCM₅₂₃ | 1.3 | 0.6 | 0.5 | 0.5 |

| Single-side thickness (µm) | Single-side areal density (g/m²) | BET specific surface area (m²/g) | Ratio of specific surface area to carbon tube length Li/S | Positive active material and mass percent (%) | PVDF mass percent (%) | | Conductive agent mass percent (%) | | |
|---|---|---|---|---|---|---|---|---|---|
| | | | | | | SP | Carbon tubes | CNT | |
| 38 | | | | | | | | | |
| Embodiment 39 | 50 | 200 | 0.7 | 3 | 97.1 NCM₅₂₃ | 1.3 | 0.6 | 0.5 | 0.5 |
| Embodiment 40 | 100 | 330 | 0.7 | 3 | 97.1 NCM₅₂₃ | 1.3 | 0.6 | 0.5 | 0.5 |
| Embodiment 41 | 200 | 500 | 0.7 | 3 | 97.1 NCM₅₂₃ | 1.3 | 0.6 | 0.5 | 9.5 |
| Embodiment 42 | 250 | 600 | 0.7 | 3 | 97.1 NCM₅₂₃ | 1.3 | 0.6 | 0.5 | 9.5 |
| Embodiment 43 | 100 | 400 | 0.1 | 5 | 97.1 LCO | 1.3 | 0.6 | 0.5 | 0.5 |
| Embodiment 44 | 100 | 200 | 15 | 0.5 | 97.1 LFP | 1.3 | 0.6 | 0.5 | 0.5 |
| Embodiment 45 | 100 | 250 | 1.1 | 1 | 97.1 LiMnOz | 1.3 | 0.6 | 0.5 | 0.5 |

### Test Part

### (1) Measuring the area percent of pore region of carbon tubes, length, and outside diameter

These parameters may be determined by using instruments and methods known in the art, for example, by using a ZEISS SEM (sigma-02-33) scanning electron microscope. The area percent of pore region is an average value obtained by measuring the area of the pore regions of 20 carbon tubes according to the scanning electron microscope images.

### (2) Measuring the thickness of the positive active material layer

Removing an electrode sheet from a battery in a 25±3 °C environment, wiping off the residual electrolytic solution from the surface of the positive electrode sheet by using dust-free paper. Cutting the positive electrode sheet with a plasma cutting machine to obtain a cross section of the positive electrode sheet. Observing the cross section of the positive electrode sheet with a scanning electron microscope. Measuring the thickness of the active material layer at a minimum of 15 different points that are 2 to 3 mm apart. Recording the average of the measured values at all test points as the thickness T of the positive active material layer.

### (3) Measuring the areal density of the positive active material layer

Removing a positive electrode sheet from a battery in a 25±3 °C environment, and drying the positive electrode sheet in a 100 °C oven. Scraping off the active material layer from a 5 cm × 5 cm region of the positive electrode sheet, and measuring a weight of the active material layer. Dividing the weight of the active material layer of the positive electrode sheet by the area of the active material layer of the positive electrode sheet to obtain the areal density of the positive active material layer.

### (4) Measuring the specific surface area of the positive active material layer

The specific surface area may be measured by using an instrument and method well known in the art. For example, a reference standard may be GB/T 19587-2017 *Determination of Specific Surface Area of Solids By Gas Adsorption Using BET Method*; and the specific surface area is measured by using a nitrogen-adsorption specific surface area analysis and test method, and the value of the specific surface area is calculated by using a Brunauer Emmett Teller (BET) method. The nitrogen-adsorption specific surface area analysis and test may be performed by using a Tri Star II 3020 specific surface and porosity analyzer manufactured by US-based Micromeritics Ltd..

### (5) Measuring the capacity retention rate of the secondary battery discharged at 2 C

Charging a secondary battery at a constant current of 0.5 C in a 25±3 °C environment until the voltage reaches a preset value (the preset value is 4.4 V when the positive active material is LCO, or 4.2 V when the positive active material is NCM523 or LMO, or 3.6 V when the positive active material is LFP), and then charging the battery at a constant voltage until a cut-off current of 0.05 C. Subsequently, discharging the battery at a current of 0.2 C and a current of 2 C consecutively to obtain a 0.2 C discharge capacity and a 2 C discharge capacity respectively. Obtaining a 2 C capacity retention rate by dividing the 2 C discharge capacity by the 0.2 C discharge capacity.

### (6) Measuring the low-temperature discharge capacity retention rate of the secondary battery

Charging a secondary battery at a constant current of 0.5 C in a 25±3 °C environment until the voltage reaches a preset value (the preset value is 4.4 V when the positive active material is LCO, or 4.2 V when the positive active material is NCM523 or LMO, or 3.6 V when the positive active material is LFP), and then charging the battery at a constant voltage until a cut-off current of 0.05 C. Subsequently, discharging the battery at a current of 0.2 C under a temperature of 25 °C and -20 °C consecutively. Obtaining a low-temperature discharge capacity retention rate by dividing the -20 °C discharge capacity by the 25 °C discharge capacity.

### (7) Measuring the direct current resistance (DCR)

Charging a secondary battery at a constant current of 0.5 C in a 25±3 °C environment until the voltage reaches a preset value (the preset value is 4.4 V when the positive active material is LCO, or 4.2 V when the positive active material is NCM523 or LMO, or 3.6 V when the positive active material is LFP), and then charging the battery at a constant voltage until a cut-off current of 0.05 C. Subsequently, discharging the battery at a current of 0.1 C for 2 hours, and then leaving the battery to stand for 1 hour. Afterward, discharging the battery at a current of 0.1 C (Ii) for 10 seconds, and recording the discharge voltage V₁ at the last moment of 1 second. Discharging the battery at a current of 1 C (I₂) for 1 second, and recording the discharge voltage V₂ at the last moment of 1 second. Calculating the direct current resistance according to: DCR = (V₁ - V₂)/(I₂ - I₁).

In addition, the secondary batteries prepared in Embodiments 1 to 45 and Comparative Embodiments 1 to 8 are subjected to a performance test, and the test results are shown in Table 3 below.

**Table 3 Performance test results of Embodiments 1 to 45 and Comparative Embodiments 1 to 8**

| Item | Low-temperature discharge capacity retention rate (%) | DCR (mΩ) | Capacity retention rate of battery discharged at 2 C (%) |
|---|---|---|---|
| Embodiment 1 | 62.3 | 56.7 | 87.8 |
| Embodiment 2 | 66.6 | 53.0 | 89.5 |
| Embodiment 3 | 66.9 | 50.2 | 91.3 |
| Embodiment 4 | 62.9 | 57.3 | 86.6 |
| Embodiment 5 | 62.8 | 57.0 | 87.4 |
| Embodiment 6 | 63.3 | 56.6 | 88.0 |
| Embodiment 7 | 64.5 | 55.3 | 89.1 |
| Embodiment 8 | 65.7 | 53.5 | 89.3 |
| Embodiment 9 | 65.3 | 52.7 | 89.8 |
| Embodiment 10 | 60.3 | 58.1 | 85.0 |
| Embodiment 11 | 60.5 | 57.9 | 85.3 |
| Embodiment 12 | 61.0 | 57.4 | 86.1 |
| Embodiment 13 | 62.3 | 56.7 | 86.5 |
| Embodiment 14 | 62.9 | 56.8 | 87.3 |
| Embodiment 15 | 63.6 | 56.5 | 87.3 |
| Embodiment 16 | 63.7 | 56.3 | 87.5 |
| Embodiment 17 | 66.8 | 50.0 | 91.2 |
| Embodiment 18 | 67.1 | 49.9 | 90.9 |
| Embodiment 19 | 66.3 | 50.3 | 90.7 |
| Embodiment 20 | 65.7 | 50.7 | 90.3 |
| Embodiment 21 | 61.7 | 56.6 | 89.1 |
| Embodiment 22 | 65.8 | 53.4 | 90.7 |
| Embodiment 23 | 67.6 | 48.7 | 92.0 |
| Embodiment 24 | 66.7 | 48.3 | 91.8 |
| Embodiment 25 | 61.7 | 53.0 | 89.0 |
| Embodiment 26 | 66.3 | 51.5 | 90.6 |
| Embodiment 27 | 67.2 | 50.2 | 92.3 |
| Embodiment 28 | 65.9 | 49.8 | 91.6 |
| Embodiment 29 | 65.1 | 50.3 | 90.7 |
| Embodiment 30 | 66.7 | 50.2 | 91.3 |
| Embodiment 31 | 66.3 | 50.8 | 90.9 |
| Embodiment 32 | 66.0 | 50.7 | 90.6 |
| Embodiment 33 | 65.8 | 50.9 | 90.1 |
| Embodiment 34 | 62.7 | 57.1 | 88.0 |
| Embodiment 35 | 63.1 | 57.2 | 87.5 |
| Embodiment 36 | 61.6 | 57.7 | 83.1 |
| Embodiment 37 | 60.7 | 58.1 | 81.8 |
| Embodiment 38 | 72.0 | 43.0 | 97.0 |
| Embodiment 39 | 68.3 | 47.5 | 92.6 |
| Embodiment 40 | 66.7 | 50.3 | 90.1 |
| Embodiment 41 | 63.0 | 54.6 | 88.3 |
| Embodiment 42 | 61.0 | 57.5 | 86.5 |
| Embodiment 43 | 60.1 | 56.5 | 88.0 |
| Embodiment 44 | 68.7 | 47.0 | 95.5 |
| Embodiment 45 | 70.3 | 50.1 | 91.8 |
| Comparative Embodiment 1 | 51.3 | 69.7 | 63.4 |
| Comparative Embodiment 2 | 52.8 | 68.8 | 64.1 |
| Comparative Embodiment 3 | 53.5 | 66.3 | 68.7 |
| Comparative Embodiment 4 | 55.0 | 66.0 | 70.2 |
| Comparative Embodiment 5 | 53.2 | 69.3 | 65.8 |
| Comparative Embodiment 6 | 57.6 | 62.7 | 69.1 |
| Comparative Embodiment 7 | 58.0 | 61.1 | 69.5 |
| Comparative Embodiment 8 | 58.2 | 60.8 | 70.7 |

As can be seen from Embodiments 1 to 9 versus Comparative Embodiments 1 to 4, when the length of the carbon tubes is 2.5 µm to 20 µm and the surface of the carbon tubes includes pores, the battery achieves a good low-temperature discharge capacity retention rate, a relatively low direct current resistance, and relatively high rate performance. A possible reason is that the carbon tubes of the foregoing characteristics used in the positive active material layer can increase the transport channels of charge-carrying ions and shorten the transport path, thereby increasing the diffusion rate of ions and the transport rate of the electrolytic solution, reducing the concentration gradient of the ions in the electrolytic solution, and alleviating the electrode polarization.

As can be seen from Embodiments 10 to 16 and Embodiments 17 to 20, when the length-to-outer diameter ratio of the carbon tubes falls within the range of 1.3 to 50, especially within a range of 3 to 40, the battery achieves higher overall performance.

As can be seen from Embodiments 21 to 24 versus Embodiment 3 and Comparative Embodiment 2, when the mass percent of the carbon tubes is greater than or equal to 0.1%, the overall performance of the battery is improved. Especially when the mass percent of the carbon tubes is 0.3% to 1%, the performance is even higher.

As can be seen from Embodiments 25 to 36 versus Comparative Embodiments 1 to 3, the positive active material layer that includes carbon nanotubes in addition to carbon tubes can further enhance the overall performance of the battery.

As can be seen from comparison between Embodiments 38 to 45, when falling within appropriate ranges, the single-side thickness, single-side areal density, and specific surface area of the positive active material layer help to ensure a relatively high energy density and cycle performance of the battery, and help to ensure processability of the electrode sheet of the battery. When a specified proportional relationship is kept between the specific surface area of the positive active material layer and the length of the carbon tubes, the specific surface area of the positive active material layer can be controlled to fall within an appropriate range by selecting an appropriate length of the carbon tubes, thereby further enhancing ion transport efficiency, charge-and-discharge efficiency, and rate performance of the battery.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A carbon-based conductive agent, comprising carbon tubes, wherein each carbon tube comprises a tube wall and a hollow region enclosed by the tube wall, at least one of the tube walls comprises pores, and an average length of the carbon tubes is L₁ µm and satisfies 2.5 ≤ L₁ ≤ 20.

2. The carbon-based conductive agent according to claim 1, wherein a number of the pores is n, and n is greater than or equal to 3.

3. The carbon-based conductive agent according to claim 1, wherein the carbon tubes satisfy at least one of the following conditions:
(1) an outside diameter of the carbon tubes is Φ₁ µm and satisfies 0.1 ≤ Φ₁ ≤ 2; and
(2) a length-to-outer diameter ratio of the carbon tubes is 1.3 to 50.

4. The carbon-based conductive agent according to claim 1, wherein an outside diameter of the carbon tubes is Φ₁ µm and satisfies 0.1 ≤ Φ₁ ≤ 1.5; and/or
a length-to-outer diameter ratio of the carbon tubes is 3 to 40.

5. The carbon-based conductive agent according to claim 1, wherein an area ratio of a pore region to the tube wall is 5% to 30%.

6. A secondary battery, comprising a positive electrode sheet, wherein the positive electrode sheet comprises a positive current collector and a positive active material layer, and the positive active material layer comprises a positive active material and the carbon-based conductive agent according to any one of claims 1 to 5.

7. The secondary battery according to claim 6, wherein, based on a total mass of the positive active material layer, a mass percentage of the carbon tubes in the positive active material layer is 0.1% to 1.0%.

8. The secondary battery according to claim 6, wherein the positive active material layer further comprises carbon nanotubes.

9. The secondary battery according to claim 8, wherein the carbon nanotubes satisfy at least one of conditions (3) to (5):
(3) the carbon nanotubes are disposed on a surface of particles of the positive active material;
(4) an average length of the carbon nanotubes is L₂ µm and 0.1 ≤ L₂ ≤ 5; and
(5) a outer diameter of the carbon nanotubes is Φ₂ nm and 3 ≤ Φ₂ ≤ 20.

10. The secondary battery according to claim 8, wherein an average length of the carbon nanotubes is L₂ µm and satisfies 1 ≤ L₂ ≤ 4; and/or
a outer diameter of the carbon nanotubes is Φ₂ nm and 5 ≤ Φ₂ ≤ 15.

11. The secondary battery according to any one of claims 6 to 9, wherein the positive active material layer satisfies at least one of conditions (6) to (8):
(6) a single-side thickness of the positive active material layer is T µm and 30 ≤ T ≤ 250;
(7) a single-side areal density of the positive active material layer is ρ g/m² and 100 ≤ ρ ≤ 600; and
(8) a specific surface area of the positive active material layer is S m²/g and 0.1 ≤ S ≤ 15.

12. The secondary battery according to any one of claims 6 to 9, wherein a single-side thickness of the positive active material layer is T µm and 100 ≤ T ≤ 200; and/or
a single-side areal density of the positive active material layer is ρ g/m² and 200 ≤ ρ ≤ 500; and/or
a specific surface area of the positive active material layer is S m²/g and 0.17 ≤ S ≤ 11.

13. The secondary battery according to claim 8, wherein a specific surface area of the positive active material layer is S m²/g and the average length of the carbon tubes is L₁ µm, and L₁ ≥ 0.5 S.

14. An electrical device, comprising the secondary battery according to any one of claims 6 to 13.
